(19) **Europäisches Patentamt European Patent Office Office européen des brevets**

(11) **EP 1 771 529 B1**

(12) **FASCICULE DE BREVET EUROPEEN**

(45) Date de publication et mention de la délivrance du brevet:
**11.12.2013 Bulletin 2013/50**

(21) Numéro de dépôt: **05788452.0**

(22) Date de dépôt: **11.07.2005**

(51) Int Cl.:
***C09K 11/77*** *(2006.01)*

(86) Numéro de dépôt international:
**PCT/FR2005/001787**

(87) Numéro de publication internationale:
**WO 2006/016058 (16.02.2006 Gazette 2006/07)**

(54) **PROCEDE DE MARQUAGE D'UN MATERIAU ET MATERIAU AINSI MARQUE**

VERFAHREN ZUR MATERIALKENNZEICHNUNG UND AUF DIESE WEISE GEKENNZEICHNETES MATERIAL

METHOD FOR MARKING A MATERIAL AND RESULTING MARKED MATERIAL

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **16.07.2004 FR 0407911**

(43) Date de publication de la demande:
**11.04.2007 Bulletin 2007/15**

(73) Titulaire: **RHODIA CHIMIE**
**92512 Boulogne Billancourt Cedex (FR)**

(72) Inventeurs:
• **LE MERCIER, Thierry**
**93110 ROSNY-SOUS-BOIS (FR)**
• **CEINTREY, Claude**
**F-78160 MARLY-LE-ROI (FR)**

(74) Mandataire: **Dubruc, Philippe et al**
**Rhodia Services**
**Direction de la Propriété Industrielle**
**40 Rue de la Haie-Coq**
**93306 Aubervilliers Cedex (FR)**

(56) Documents cités:
**EP-A- 0 498 689      EP-A- 0 581 621**
**WO-A-03/089661      US-A- 6 165 609**

• **DATABASE WPI Section Ch, Week 197545 Derwent Publications Ltd., London, GB; Class L03, AN 1975-75283W XP002324862 & SU 458 056 A (BOLSHUKHIN V A) 12 mars 1975 (1975-03-12)**

**Description**

La présente invention concerne un procédé de marquage d'un matériau et un matériau ainsi marqué.

Il existe un besoin important pour assurer de manière fiable et sûre le marquage ou l'authentification de matériaux divers, par exemple des documents fiduciaires, afin notamment de détecter les contrefaçons. De nombreuses techniques existent à cet effet. On peut mentionner plus particulièrement les procédés qui consistent à incorporer dans le matériau que l'on cherche à marquer des substances luminescentes qui peuvent être excitées et qui peuvent émettre dans une ou plusieurs parties du spectre visible ou invisible. Toutefois, il est nécessaire de renouveler fréquemment ces procédés pour éviter qu'ils ne deviennent inefficaces.

L'objet de l'invention est de fournir un nouveau procédé.

Dans ce but, le procédé de l'invention, pour le marquage d'un matériau, est caractérisé en ce qu'on incorpore dans le matériau

- soit au moins un luminophore apte à produire, après excitation, deux émissions de lumière dont les longueurs d'onde et les temps de déclin de l'émission respectifs sont différents;
- soit plusieurs luminophores aptes à produire, chacun, après excitation, une émission de lumière dont la longueur d'onde et le temps de déclin de l'émission sont différents de la longueur d'onde et du temps de déclin de l'émission de l'autre ou des autres luminophores.

L'invention concerne aussi un matériau du type papier, carton, peinture, textile, encre, verre ou matériau macromoléculaire qui est caractérisé en ce qu'il comprend :

- soit au moins un luminophore apte à produire, après excitation, deux émissions de lumière dont les longueurs d'onde et les temps de déclin de l'émission respectifs sont différents;
- soit plusieurs luminophores aptes à produire, chacun, après excitation, une émission de lumière dont la longueur d'onde et le temps de déclin de l'émission sont différents de la longueur d'onde et du temps de déclin de l'émission de l'autre ou des autres luminophores.

L'invention concerne enfin un procédé pour l'authentification d'un matériau qui est caractérisé en ce que l'on soumet le matériau à une excitation et on observe si le matériau produit au moins deux émissions de lumière dont les longueurs d'onde et les temps de déclin de l'émission respectifs sont différents.

D'autres caractéristiques, détails et avantages de l'invention apparaîtront encore plus complètement à la lecture de la description qui va suivre et du dessin annexé dans lequel :

- la figure unique est un graphe qui représente le spectre d'émission d'un luminophore selon l'invention pour une longueur d'onde d'excitation de 370 nm.

Par terre rare ou lanthanide on entend pour la suite de la description les éléments du groupe constitué par l'yttrium et les éléments de la classification périodique de numéro atomique compris inclusivement entre 57 et 71.

On précise aussi pour la suite de la description que, sauf indication contraire, dans les fourchettes de valeurs qui sont données, les valeurs aux bornes sont incluses.

Le procédé de l'invention peut être mis en oeuvre selon deux variantes suivant que l'on utilise un luminophore ou une combinaison de plusieurs, deux ou plus, luminophores. La première variante à un seul luminophore est la variante préférée car elle est la plus simple.

Le luminophore de la première variante est de préférence utilisé seul et, de ce fait, il doit avoir tout d'abord la propriété d'émettre, après excitation, de la lumière dans deux longueurs d'onde différentes $\lambda_1$ et $\lambda_2$. L'excitation peut être de nature diverse, ce peut être un rayonnement de longueur d'onde du spectre visible ou invisible. Ce peut être plus particulièrement un rayonnement UV.

L'autre propriété du luminophore est que les temps respectifs de déclin de l'émission pour chacune des longueurs d'onde démission sont différents. Ainsi, si à la longueur d'onde $\lambda_1$ correspond un temps de déclin $\tau_1$ et à la longueur d'onde $\lambda_2$ correspond un temps de déclin $\tau_2$, on doit avoir $\tau_1 \neq \tau_2$.

Par temps de déclin on entend, d'une manière bien connue dans le domaine technique de la présente invention, la constante $\tau$ selon la formule :

$$I(t) = I_0 . e^{-t/\tau}$$

dans laquelle t désigne le temps, I l'intensité de l'émission à l'instant t et $I_0$ l'intensité d'émission à t = 0.

Comme luminophores présentant de telles propriétés, on peut mentionner notamment une première famille (1) constituées par des silicates de baryum et de magnésium et en particulier ceux de formule :

$$Ba_{3(1-x)}Eu_{3x}Mg_{1-y}Mn_ySi_2O_8 \qquad (1-1)$$

dans laquelle $0 < x \leq 0,3$ et $0 < y \leq 0,3$.

Lorsqu'ils sont soumis à une excitation UV ou proche UV (UVA), c'est à dire à un rayonnement dans une gamme de longueur d'onde comprise entre environ 250 nm et environ 370 nm ou entre 370 nm et 420 nm, ces luminophores ont pour propriété d'émettre dans le rouge et aussi dans le bleu, c'est à dire dans une gamme de longueurs d'onde comprises entre 400 nm et 500 nm pour le bleu et entre 550 nm et 700 nm pour le rouge, avec un bon rendement.

Plus particulièrement, les luminophores peuvent répondre à la formule (1-1) précitée dans laquelle $0,0001 \leq x \leq 0,25$ et $0,0001 \leq y \leq 0,25$.

Encore plus particulièrement, les luminophores peuvent répondre à la formule (1-1) précitée dans laquelle $0,01 \leq x \leq 0,25$ et $0,01 \leq y \leq 0,25$.

On peut noter qu'il est avantageux d'avoir une concentration en europium dans le luminophore d'au moins 0,01 % pour obtenir une émission de meilleure intensité. Il est aussi avantageux d'avoir une concentration en europium et en manganèse d'au plus 25% afin de limiter au maximum des phénomènes d'auto-extinction gênants. Les pourcentages indiqués ci-dessus correspondent aux taux de substitution en mole des ions dopants $Eu^{2+}$ et $Mn^2$ respectivement aux ions $Ba^{2+}$ et $Mg^{2+}$ (rapport molaire substituant/(substituant+élément substitué).

Selon encore un autre mode de réalisation, le luminophore de formule (1-1) vérifie les valeurs de x et y suivantes : $0,01 \leq x \leq 0,03$ et $0,04 \leq y \leq 0,06$. Pour ces valeurs de x et de y l'intensité d'émission est la plus importante.

Dans la même famille (1) de luminophores on peut citer aussi comme utilisables pour la présente invention ceux de formules :

$$BaMg_2Si_2O_7: Eu, Mn \qquad (1-2)$$

$$Ba_2MgSi_2O_7: Eu, Mn \qquad (1-3)$$

dans lesquelles l'europium et le manganèse sont comme précédemment en substitution du baryum et du magnésium et dans les mêmes quantités que celles décrites ci-dessus pour les produits de la formule (1-1). A titre d'exemple le produit de formule (1-2) émet dans le rouge vers 690 nm et dans le bleu vers 400 nm.

Enfin, dans les composés de cette première famille, au moins un des éléments baryum, magnésium et silicium peut être partiellement substitué par d'autres éléments supplémentaires en plus de ceux qui ont été décrits plus haut. Ainsi, le baryum peut être partiellement substitué par du calcium et/ou du strontium dans une proportion qui peut aller jusqu'à environ 30%, cette proportion étant exprimée par le rapport atomique substituant/(substituant+baryum). Le magnésium peut être partiellement substitué par du zinc dans une proportion qui peut aller jusqu'à environ 30%, cette proportion étant aussi exprimée par le rapport atomique Zn/(Zn+Mg). Enfin, le silicium peut être partiellement substitué par du germanium, de l'aluminium et/ou du phosphore dans une proportion qui peut aller jusqu'à environ 10%, cette proportion étant exprimée par le rapport atomique substituantl(substituant+silicium).

Comme autre famille de luminophores pouvant être utilisés dans le cas de la première variante de l'invention (variante à un seul luminophore) on peut aussi mentionner la famille (2) comprenant des aluminates de baryum et de magnésium et notamment ceux des formules suivantes :

$$(2-1) \qquad BaMgAl_{10}O_{17}$$

$$(2-2) \qquad BaMg_2Al_{16}O_{27}$$

$$(2-3) \qquad BaMgAl_{14}O_{23}$$

dans lesquelles le baryum et le magnésium sont substitués en partie par l'europium et le manganèse respectivement et dans des proportions qui peuvent être comprises entre 0,01% et 25% notamment, ces proportions substituant/substitué étant exprimées comme précédemment. Cette proportion peut être tout particulièrement de l'ordre de 10%. A titre d'exemple les produits de formule (2-1) à (2-3) émettent dans le bleu vers 450 nm environ et dans le vert vers 505 nm environ.

Les luminophores des familles (1) et (2) sont des produits connus qui se préparent généralement par une réaction à l'état solide à haute température des oxydes des métaux requis ou des composés organiques ou minéraux susceptibles de former ces oxydes par chauffage comme les carbonates, oxalates, hydroxydes, acétates, nitrates, borates desdits métaux.

Ils peuvent aussi être préparés par co-précipitation à partir de solutions des précurseurs des oxydes désirés, par exemple en milieu aqueux.

On peut aussi utiliser, à titre de luminophore unique, un luminophore de formule (3) $LnPO_4$ dans laquelle Ln désigne un mélange de lanthanides, comme le mélange Ce, Tb et notamment les luminophores de formule $(LaCeTb)PO_4$, $(LaCeDy)PO_4$, $(LaCeNd)PO_4$. On peut citer encore plus particulièrement un luminophore de formule $La_x$-$Ce_yTb_{(1-x-y)}PO_4$ dans laquelle $0,4 \leq x \leq 0,6$ et $x+y > 0,8$. Un tel luminophore est décrit notamment dans les demandes de brevet EP-A-498689 et EP-A-581621. De par la présence du lanthane, ce luminophore émet dans l'ultraviolet avec un temps de déclin de 10 ns et, du fait de la présence du terbium, il émet aussi dans le vert avec un temps de déclin de 1 ms.

Toujours à titre de luminophore unique, on peut encore utiliser les pyrophosphates d'alcalino-terreux de formule (4) $M_2P_2O_7$: Eu, Mn dans laquelle M désigne au moins un alcalino-terreux (Sr, Mg, Ca, Ba par exemple), l'europium et le manganèse étant présents comme dopant en substitution de l'élément M, comme dans les luminophores décrits précédemment et dans les mêmes proportions. On peut citer ainsi $SrP_2O_7$: Eu, Mn produisant une émission bleue à 425 nm et une émission rouge-orange à 590 nm.

On peut aussi utiliser les orthophosphates d'alcalino-terreux de formule (5) $M_3PO_4$ : Eu, Mn dans laquelle M désigne au moins un alcalino-terreux (Sr, Mg, Ca, Ba par exemple), l'europium et le manganèse étant présents comme dopant en substitution de l'élément M, comme dans les luminophores décrits précédemment et dans les mêmes proportions ainsi que les halophosphates de formule (6) $Ca_5(PO_4)_3X$ : Eu, Mn, dans laquelle le calcium peut être éventuellement substitué par au moins un alcalino-terreux et X est un halogène comme le chlore notamment, l'europium et le manganèse étant des dopants comme précédemment décrit et dans les mêmes proportions. A titre d'exemple on peut citer $Ca_5(PO_4)_3Cl$: Eu, Mn produisant une émission bleue à 450 nm et une émission rouge-orange à 590 nm.

On peut encore utiliser comme luminophore unique les thiogallates d'alcalino-terreux de formule (7) $MGa_2S_4$ : Eu, Mn, dans laquelle M désigne au moins un alcalino-terreux (Sr, Mg, Ba par exemple) l'europium et le manganèse étant des dopants comme précédemment décrit et dans les mêmes proportions.

La deuxième variante de l'invention consiste à utiliser deux luminophores ou plus. Dans ce cas, le premier luminophore doit être susceptible d'émettre, après excitation, une lumière de longueur d'onde $\lambda'_1$ à laquelle correspond un temps de déclin de l'émission $-\tau'_1$. Par ailleurs l'autre luminophore doit être susceptible d'émettre, après excitation, une lumière de longueur d'onde $\lambda'_2$ à laquelle correspond un temps de déclin de l'émission $\tau'_2$ et on doit avoir $\tau'_1 \neq \tau'_2$. Ce qui a été dit plus haut sur la nature de l'excitation s'applique aussi ici.

On peut utiliser tout luminophore choisi dans les familles des sulfures, des sélénures, des sulfosélénures, des oxysulfures, des borates, des aluminates, des gallates, des silicates, des germanates, des phosphates, des halophosphates, des oxydes, des arséniates, des vanadates, des niobates, des tantalates, des sulfates, des tungstates, des molybdates, des halogénures d'alcalin et d'autres halogénures ou nitrures.

On donne ci-dessous, à titre d'exemples, une liste de luminophores pouvant être utilisés. L'élément A désigne un élément susbtituant ou dopant et Ln un lantanide :

BaFCI:Eu; BaFCI:Sm; BaFBr:Eu; $BaFCi_{0.5}Br_{0.5}$:Sm; $BaY_2F_8$:A (A=Pr, Tm, Er, Ce); $BaSi_2O_5$:Pb; $BaMg_2Al_{16}O_{27}$:EU; $BaMgAl_2O_3$:Eu; $Ba_2P_2O_7$:Ti; $(Ba,Zn,Mg)_3Si_2O_7$:Pb; $Ce_{0.5}Tb_{0.35}MgAl_{11}O_{19}$:Ce,Tb; $3,5MgO.0,5MgF_2.GeO_2$:Mn; $MgWO_4$:Pb; $BaSiO_4$:Eu; $Zn_2SiO_4$:Mn; ZnO:Zn; $Zn_3(PO_4)_2$:Mn; ZnS:A (A=Ag, Al, Cu, Mn, Ln, Ln pouvant être Tb ou Eu notamment), $ZnS:TbF_3$, $ZnS:EuF_3$; (Zn,Cd)S:A (A=Cu, Al, Ag, Ni); CaS:A (A=lanthanides, Bi); (Ca,Sr)S:Bi; $CaWO_4$:Pb; $CaWO_4$:Sm; $CaSO_4$:A (A=Mn, lanthanides); $3Ca_3(PO_4).Ca(F,Cl)_2$:Sb,Mn; $Ca_2Al_2Si_2O_7$:Ce; $2SrO.6(B_2O_3).SrF_2$:Eu; $3Sr_3(PO_4)_2.CaCl_2$:Eu; $A_3(PO_4)2ACl_2$:Eu (A=Sr, Ca, Ba); $(Sr,Mg)_2P_2O_7$:Eu; SrS:Ce; SrS:Sm,Ce; SrS:Sm; SrS:Eu; SrS:Eu,Sm; SrS:Cu,Ag; $Sr_2P_2O_7$:Sn; $Sr_2P_2O_7$:Eu; $Sr_4Al_{14}O_{25}$:Eu; $SrGa_2S_4$:A (A=lanthanides, Pb); $SrGa_2S_4$:Pb; $Sr_3Gd_2Si_6O_{18}$:Pb,Mn; $YF_3$:Yb,Er; $YF_3$:Ln ; $YLiF_4$:Ln ; $Y_3Al_5O_{12}$:Ln ; $YAl_3(BO_4)_3$:Nd,Yb; $(Y,Ga)BO_3$:Eu; $(Y,Gd)BO_3$:Eu; $Y_3(Al,Ga)_5O_{12}$:Tb; $Y_2SiO_5$:Ln, Ln pouvant être plus particulièrement Eu; $Y_2O_3$:Ln, Ln pouvant être plus particulièrement Eu ou Tb; $Y_2O_2S$:Ln, Ln pouvant être plus particulièrement Eu; $YVO_4$:A (A=lanthanides, notamment Eu, Sm, Dy, ou A=In); $Y(P,V)O_4$:Eu; YTaO4:Nb; YAlO3:A (A=Pr, Tm, Er, Ce); YOCl:Yb,Er; $LuVO_4$:Eu; $GdVO_4$:Eu; $Gd_2O_2S$:Tb; $GdMgB_5O_{10}$:Ce,Tb; LaOBr:Tb; $La_2O_2S$:Tb; $LaF_3$:Nd,Ce; $BaYb_2F_8$:Eu; $NaYF_4$:Yb,Er; $NaGdF_4$:Yb,Er; $NaLaF_4$:Yb,Er; $LaF_3$:Yb,Er,Tm; $BaYF_5$:Yb,Er; $Ga_2O_3$:Dy; GaN:A (A=Pr, Eu, Er, Tm); $LiCaAlF_6$:Ce; $LiSrAlF_6$:Ce; $LiLuF_4$:A (A=Pr, Tm, Er, Ce); $Li_2B_4O_7$:Mn, SiOx:Er,Al (0<x<2). On peut aussi mentionner $LaPO_4$:Eu, $LaPO_4$:Ce, $SiO_2$:Dy.

La première variante qui a été décrite ci-dessus est la plus intéressante dans la mesure où elle ne met en oeuvre qu'un seul luminophore mais il va de soit que l'on ne sortirait pas du cadre de la présente invention si l'on utilisait une combinaison de plusieurs luminophores qui présenteraient cependant la propriété d'émettre chacun dans deux longueurs d'ondes différentes avec des temps de déclin différents. Une telle mise en oeuvre est plus complexe mais elle n'est pas exclue, par exemple pour des procédés de marquage plus sophistiqués.

On peut aussi envisager, en restant toujours dans le cadre de l'invention, d'utiliser un premier luminophore capable d'émettre dans deux longueurs d'ondes différentes (luminophore du type de ceux décrits pour la première variante) avec un second luminophore (du type de ceux décrits pour la seconde variante) qui n'émet que dans une seule longueur d'onde et qui soit apte à produire, après excitation, une émission de lumière dont la longueur d'onde et le temps de déclin de l'émission sont différents des longueurs d'onde et des temps de déclin des émissions du premier luminophore. Ce mode de réalisation s'applique particulièrement au cas où le premier luminophore présente deux émissions mais dont l'intensité de l'une serait particulièrement plus intense que celle de l'autre, par exemple dans un rapport d'intensité d'au moins 5, plus particulièrement d'au moins 10. Ce mode de réalisation peut être intéressant lorsque l'on souhaite favoriser l'émission d'une couleur donnée, comme le rouge et ce qui peut être obtenu par exemple avec des produits de formule (1-1) fortement dopés en manganèse et en europium.

Pour les deux variantes décrites précédemment, la différence entre les temps de déclin des états excités peut varier dans une large gamme qui n'est pas critique. Cette différence doit être toutefois suffisamment grande pour pouvoir être détectée par des systèmes connus, de préférence des systèmes dont le coût n'est pas trop élevé ou dont l'emploi n'est pas trop sophistiqué. A titre d'exemple les luminophores peuvent être choisis de telle manière que les différents temps de déclin de l'émission soient dans un rapport ($\tau_1/\tau_2$ ou $\tau'_1/\tau'_2$) généralement d'au plus $10^{-1}$, de préférence d'au plus $10^{-3}$ et encore plus préférentiellement d'au plus $10^{-5}$. Par exemple, ce rapport peut être compris entre $10^{-6}$ et $10^{-3}$, plus particulièrement entre $10^{-6}$ et $10^{-5}$.

En outre, la différence entre les longueurs d'onde émises, par exemple $\lambda_1 - \lambda_2$ ou $\lambda'_1 - \lambda'_2$ peut être plus particulièrement d'au moins 50 nm et encore plus particulièrement d'au moins 100 nm.

De plus, et toujours pour les deux variantes de l'invention, il est préférable d'utiliser un ou des luminophores qui émettent dans le visible et qui émettent dans des couleurs différentes car, dans ce cas, il est possible de réaliser à l'oeil nu les vérifications ou authentifications selon le procédé de l'invention.

Le procédé de l'invention est destiné au marquage ou à l'authentification de tout matériau dont il peut être utile ou nécessaire de connaître l'origine, la validité ou l'authenticité. De ce fait, la nature du matériau peut être très variée. Dans la suite de la description concernant les différents matériaux susceptibles d'être marqués par le procédé de l'invention, on utilisera par commodité le terme luminophore au singulier, étant entendu que la description s'applique bien aux deux variantes décrites plus haut, c'est à dire à l'utilisation d'un luminophore seul ou d'une combinaison de plusieurs luminophores. Bien entendu outre le procédé de marquage qui a été décrit ci-dessus, l'invention concerne, en tant que tel, le matériau dont la description va suivre maintenant.

L'invention s'applique tout particulièrement à un matériau solide. Ainsi, il peut s'agir d'un papier ou d'un carton. Dans ce cas, le luminophore peut être incorporé dans les fibres du papier ou du carton. On peut aussi utiliser le procédé dit de couchage en incorporant le luminophore dans un liant transparent au rayonnement d'excitation que l'on dépose par enduction sur une partie ou sur toute la surface des feuilles de papier ou du carton que l'on désire marquer.

Le matériau peut être une peinture, le terme peinture s'entend ici au sens large et s'applique ainsi aux formulations ou compositions désignées habituellement par ce terme dans le domaine technique des peintures. On inclut donc les lasures ou vernis et on peut mentionner les compositions à base des résines en émulsion de type alkydes, acryliques, ou phénoliques à titre d'exemple.

Le matériau peut être aussi un textile. On entend par là toute matière textile naturelle ou synthétique sous forme tissée, non tissée ou tricotée. Les fibres de ces matières peuvent être notamment constituées totalement ou être à base de kératine, coton, lin, laine, viscose, rayonne, chanvre, soie, polypropylène, polyéthylène, polyester, polyuréthanne, polyamide, acétate de cellulose ou un mélange de celles-ci.

Le matériau peut aussi être une encre, notamment une encre d'imprimerie.

Le matériau peut aussi être un matériau macromoléculaire. Celui-ci peut être de différentes natures : élastomérique, thermoplastique, thermodurcissable. Dans ce cas, le luminophore peut être incorporé dans le matériau macromoléculaire en le mélangeant dans le matériau sous forme fondue et éventuellement en soumettant le mélange à un cisaillement important, par exemple dans un dispositif d'extrusion bi-vis, afin de réaliser une bonne dispersion. Un autre procédé consiste à mélanger le luminophore à incorporer aux monomères dans le milieu de polymérisation, puis à effectuer la polymérisation.

Enfin, le matériau peut être un verre.

L'invention peut s'appliquer tout particulièrement au marquage d'un matériau de type document fiduciaire. Par « document fiduciaire » on désigne ici les papiers tels que papiers pour billets de banque, chèques, valeurs, timbres, papiers d'identité, livres comptables, ainsi que les cartes de crédit, de paiement et les documents analogues dont l'authentification est importante.

Le luminophore selon l'invention peut être introduit sur ou dans le document fiduciaire à marquer. On peut par exemple l'incorporer dans ou sur le papier, dans ou sur les matières plastiques susceptibles de revêtir le document à identifier.

La quantité de luminophore à utiliser peut varier dans une très large gamme. A titre d'exemple, celle-ci, exprimée en masse de luminophore par rapport à la masse du matériau marqué, peut être comprise entre $1.10^{-6}$ et 15%, plus particulièrement entre 0,01% et 5% et encore plus particulièrement entre 0,5% et 3%.

L'invention peut s'appliquer aussi au marquage des objets d'art, des objets de luxe et des produits industriels.

L'invention concerne enfin un procédé d'authentification d'un matériau. Ce procédé s'applique bien entendu à la vérification ou l'authentification des matériaux du type de ceux qui viennent d'être décrits ci-dessus et il met en oeuvre le principe de l'invention, c'est-à-dire les propriétés d'un ou de plusieurs luminophores qui produit ou produisent des émissions à longueurs d'onde et temps de déclin différents. Le procédé consiste par conséquent à soumettre le matériau à vérifier, ce peut donc être un matériau tel que décrit plus haut ou obtenu par le procédé de marquage de l'invention ou encore un matériau supposé obtenu par ce procédé et dont on veut ainsi vérifier l'authenticité, à une excitation du type décrit précédemment et à observer si ce matériau produit ou non au moins deux émissions de lumière dont les longueurs d'onde et les temps de déclin de l'émission respectifs sont différents.

Le procédé de vérification ou d'authentification de l'invention peut être mis en oeuvre en utilisant tout type de détecteur approprié. Par exemple, on peut utiliser un détecteur muni d'une ou de plusieurs sources émettant, sous forme de flashes, la ou les radiations convenables vers le matériau, cette ou ces sources pouvant être par exemple une lampe pour le rayonnement ultraviolet, une lampe ou une photodiode pour le rayonnement infra-rouge. Le détecteur comprend en outre des moyens de mesure d'un signal d'émission, par exemple un spectromètre, ces moyens fonctionnant par périodes temporelles pour pouvoir détecter des émissions décalées dans le temps. La détection de la lumière visible peut être faite par exemple au moyen de photodétecteurs, notamment photodiodes ou photomultiplicateurs, qui seront adaptés à la détection des longueurs d'onde concernées.

On notera aussi qu'il est possible pour certains luminophores de pouvoir faire la vérification ou l'authentification à l'oeil nu, il s'agit du mode de réalisation qui a été déjà décrit plus haut et dans lequel on utilise un ou des luminophores qui émettent dans le visible et qui émettent dans des couleurs différentes. Dans ce cas là, le procédé selon l'invention pour l'authentification d'un matériau peut être mis en oeuvre notamment en appliquant un mouvement relatif entre le matériau et la source d'excitation. On obtient ainsi un balayage du matériau par un rayon d'une source d'excitation ce qui fait apparaître dans ce cas sur le matériau correctement marqué une couleur de fond avec des traînées d'une couleur différente. Cet effet correspond à l'extinction rapide de l'émission au temps de déclin le plus faible et à la rémanence de l'émission au temps de déclin le plus long. La présence ou non de cet effet visuel permet ainsi d'authentifier le matériau à l'oeil nu. On peut indiquer que la vitesse relative entre le matériau et la source d'excitation doit être suffisamment rapide pour obtenir l'effet visuel décrit ci-dessus, par exemple elle doit être d'au moins 20 cm/s. Le procédé peut être mis en oeuvre d'une manière extrêmement simple en utilisant par exemple un crayon-diode émettant une lumière de longueur d'onde comprise entre 350 nm et 420 nm. On fait émettre le crayon-diode et on balaye avec le crayon-diode et donc le rayon lumineux qui en est issu le matériau à vérifier. On observe ou non l'effet de trace décrit plus haut ce qui permet d'authentifier le matériau ou au contraire de prouver qu'il ne s'agit pas d'un matériau marqué.

La détection à l'oeil nu peut aussi se faire en soumettant le matériau à l'excitation puis en éteignant la source d'excitation. On observe alors s'il se produit un phénomène de rémanence d'une lumière d'une couleur différente de celle observée lorsque la source d'excitation fonctionne.

Des exemples vont maintenant être donnés.

EXEMPLE 1

Cet exemple illustre le marquage d'un film polymère selon le procédé de l'invention.

- a) Préparation du luminophore

On prépare un composé luminophore répondant à la composition $Ba_3MgSi_2O_8$ : 2% $Eu^{2+}$, 5% $Mn^{2+}$ et correspondant à la formule $Ba_{2,94}Eu_{0,06}Mg_{0,95}Mn_{0,05}Si_2O_8$ (les pourcentages indiqués pour les ions dopants correspondent aux taux de substitution en mole des ions $Eu^{2+}$ et $Mn^{2+}$ respectivement aux ions $Ba^{2+}$ et $Mg^{2+}$). On procède par voie solide en mélangeant les oxydes $BaCO_3$, $Eu_2O_3$, $(MgCO_3)_4Mg(OH)_2.5H_2O$, $MnCO_3$ et $SiO_2$ dans des proportions stoechiométriques. 0,4 mole de $NH_4Cl$ est ajoutée au mélange en tant que flux.

| Produits de départ | Quantités mises en oeuvre |
|---|---|
| $BaCO_3$ | 1,8629 g |
| $Eu_2O_3$ | 0,0339 g |
| $(MgCO_3)_4Mg(OH)_2.5H_2O$ | 0,2963 g |
| $MnCO_3$ | 0,0185 g |
| $SiO_2$ | 0,3858 g |
| $NH_4Cl$ | 0,0687 g |

Ces produits de départ sont mélangés de façon homogène par broyage; le mélange, placé dans un creuset en alumine, est introduit dans un four où il subit deux traitements thermiques. Un premier traitement thermique est effectué à 600 °C pendant 4 heures à l'air. Le mélange, de couleur grise, est alors broyé puis replacé au four dans un creuset en alumine. Après une purge de 4 heures du four avec un mélange $Ar/H_2$ 10 %, le mélange est chauffé 4 heures à 1200 °C dans cette atmosphère réductrice. Une rampe de montée et de descente en température de 360 °C/h est employée.

b) Préparation du film polymère

Le produit obtenu précédemment est étuvé pendant 12h à 90°C. Il est ensuite mélangé en mélangeur cube pendant 10 minutes avec du PEBD (polyéthylène basse densité) Lacqtène 1020FN24, du PEG 400 (agent collant) et un antioxydant Irganox B225. Les formulations mises en oeuvre sont les suivantes :

| | |
|---|---|
| PEBD Lacqtène 1020FN24 | 1495,5 g |
| Luminophore | 1,5 g |
| Irganox B225 (0,1%) | 1,5 g |
| PEG 400 (0,1%) | 1,5 g |
| Total | 1500 g |

La mise en oeuvre est réalisée sur une extrudeuse double vis ZSK30 sur laquelle est adaptée une filière plate de 30cm de largeur et d'ouverture réglable ainsi qu'une machine de film cast permettant d'étirer le film en sortie d'extrudeuse afin de l'amener à l'épaisseur de 100$\mu$m.

La température dans l'extrudeuse et dans la filière pour film est de 180°C. La température à l'entrée de la machine film cast est de 70°C. Les autres conditions sont les suivantes :

| vitesse vis | débit trémie | vitesse cylindres | couple bivis | pression sortie filière |
|---|---|---|---|---|
| 96tpm | 4kg/h | 2,3m/min | 6,3A | 49bars |

c) Détection

La détection peut se faire de la manière suivante.

Dans un premier temps, on soumet le film à un éclairage continu d'une longueur d'onde de 370nm. Celui-ci émet une lumière pourpre. On donne dans la figure jointe le spectre d'émission pour cette longueur d'onde d'excitation. On voit que le composé émet en réponse dans le rouge (pic vers 625 nm) et aussi dans le bleu (pic vers 440 nm).

Dans un deuxième temps, on émet un flash à 370 nm puis on prend le spectre après 1 ms. On constate alors la seule présence du pic correspondant au rouge. L'émission rouge est due au manganèse et elle correspond à un temps de déclin $\tau_1$ de 35 ms alors que l'émission bleue est due à l'europium et correspond à un temps de déclin $\tau_2$ de 339 ns.

On peut aussi faire la détection à l'oeil nu. Pour cela on balaie la surface du film avec une source (crayon-diode) émettant un rayon lumineux de longueur d'onde de 370 nm. Le film émet une lumière de couleur pourpre et il apparaît lors du balayage une traînée rouge. Ce phénomène est dû à l'extinction rapide de l'émission bleue et à la rémanence de l'émission rouge.

EXEMPLE 2

Cet exemple illustre le marquage du même film polymère que dans l'exemple 1 mais avec un autre luminophore.

a) Préparation du luminophore

On prépare un composé luminophore correspondant à la formule $Ba_{0,9}Eu_{0,1}Mg_{0,95}Mn_{0,05}Al_{10}O_{17}$ par le même procédé par voie solide que dans l'exemple 1 et en utilisant les mêmes produits de départ que dans cet exemple pour le baryum, l'europium, le magnésium et le manganèse. On utilise en outre une alumine comme source d'aluminium.

| Produits de départ | Quantités mises en oeuvre |
|---|---|
| $BaCO_3$ | 1,665 g |

(suite)

| Produits de départ | Quantités mises en oeuvre |
|---|---|
| $Eu_2O_3$ | 0,125 g |
| $(MgCO_3)_4Mg(OH)_2.5H_2O$ | 0,345 g |
| $MnCO_3$ | 0,041 g |
| $Al_2O_3$ | 3,608 g |

On procède comme dans l'exemple 1 mais en utilisant 1% massique de $MgF_2$ comme flux et en effectuant le dernier traitement thermique à 1400°C.

b) Préparation du film polymère

On procède comme dans l'exemple 1 en incorporant dans le PEBD le produit préparé de la manière décrite ci-dessus.

c) Détection

Lorsque le film est soumis à un éclairage continu d'une longueur d'onde de 370 nm, il émet une lumière bleue-verte. Le spectre d'émission présente un pic à 450 nm (lumière bleue) et un pic à 514 nm (lumière verte).
On fait une détection à l'oeil nu. Pour cela on balaie la surface du film avec une source (crayon-diode) émettant un rayon lumineux de longueur d'onde de 370 nm. Le film émet une lumière bleue-verte et il apparaît lors du balayage une traînée verte. Ce phénomène est dû à l'extinction rapide de l'émission bleue et à la rémanence de l'émission verte.
Les exemples qui suivent 3 à 5 concernent le marquage dans le papier selon le procédé de l'invention. Le luminophore utilisé est celui de l'exemple 1.

EXEMPLE 3

Cet exemple concerne une formule papier avec bois dont la pâte est mécanique ou thermomécanique. On prépare ainsi une formule de couchage de composition ci-dessous (en parties en poids) :

| | |
|---|---|
| $CaCO_3$ | 50 |
| Kaolin | 50 |
| Rhodopas® SBO 24 (latex de styrène-butadiène) | 11 |
| CMC FF5 (carboxyméthylcellulose) | 1,5 |
| Rhodoviol 4/20® (Alcool polyvinylique) | 0,3 |
| Luminophore | 10 |

L'extrait sec est de 50%, la viscosité Brookfield mesurée à 100tr/min. est de 800 à 1000 cps.
La formule est déposée par une barre de Meyer (tige filetée) à hauteur de 8 g/m$^2$ sur un support papier LWC à 50 g/m$^2$.
On sèche.
Pour la détection, on balaie la surface du papier ainsi obtenu avec un crayon-diode émettant un rayon lumineux de longueur d'onde de 370 nm. Le papier émet une lumière de couleur pourpre au point de contact du rayon et du papier et il apparaît une traînée rouge dans le sillage du déplacement de ce point lors du balayage avec le crayon-diode à une vitesse de 25 cm/s.

EXEMPLE 4

Cet exemple concerne une formule papier sans bois, double couché, dont la pâte est d'origine chimique.
On prépare ainsi une première formule de couchage pour la couche de surface, de composition ci-dessous (en parties en poids) :

| | |
|---|---|
| $CaCO_3$ | 80 |

(suite)

| Kaolin | 20 |
|---|---|
| Rhodopas® SBO 24 | 10 |
| CMC FF5 | 0,5 |
| Rhodoviol 4/20® | 0,5 |
| Luminophore | 10 |

L'extrait sec est de 68%, la viscosité Brookfield mesurée à 50tr/min. est de 1000 cps.

La formule est déposée par une barre de Meyer à hauteur de 10 g/m$^2$ sur un support papier.

On prépare aussi une seconde formule de couchage pour la pré-couche de composition ci-dessous (en parties en poids) :

| CaCO$_3$ | 100 |
|---|---|
| Amidon | 6 |
| Rhodopas® SBO 24 | 6 |
| Rhodoviol 4/20® | 0,5 |
| Luminophore | 10 |

L'extrait sec est de 55%, la viscosité Brookfield mesurée à 50tr/min. est de 500 cps.

La formule est déposée par une barre de Meyer à hauteur de 10 g/m$^2$ sur le support papier.

La détection se fait de la même manière que celle décrite dans l'exemple 3 avec le même crayon-diode et on observe aussi l'apparition d'une traînée rouge lors du balayage en plus de la couleur pourpre.

EXEMPLE 5

Cet exemple concerne une formule papier « sizé ».

On prépare ainsi une formule de couchage de composition ci-dessous (en parties en poids) :

| Amidon | 25 |
|---|---|
| Luminophore | 3 |

L'extrait sec est de 15%.

La formule est déposée par une barre de Meyer à hauteur de 20 g/m$^2$ sur le support papier.

La détection se fait de la même manière que celle décrite dans l'exemple 3 avec le même crayon-diode et on observe là encore l'apparition d'une traînée rouge lors du balayage en plus de la couleur pourpre.

EXEMPLE 6

Cet exemple illustre l'utilisation de deux luminophores selon le mode de réalisation décrit plus haut dans lequel on utilise un luminophore A du type de la première variante avec un autre luminophore B du type de la seconde variante. Le luminophore A est celui de l'exemple 1, le luminophore B est $Ba_2SiO_4$ :Eu ($Ba_{1,98}Eu_{0,02}SiO_4$) qui émet dans le vert à 510 nm. La proportion massique des deux luminophores est de 50/50.

On incorpore les deux luminophores dans une formule papier du même type que celle de l'exemple 3, et avec la formule de couchage ci-dessous :

| CaCO$_3$ | 50 |
|---|---|
| Kaolin | 50 |
| Rhodopas® SBO 24 (latex de styrène-butadiène) | 11 |
| CMC FF5 (carboxyméthylcellulose) | 1,5 |

(suite)

| Rhodoviol 4/20® (Alcool polyvinylique) | 0,3 |
|---|---|
| Luminophores A + B | 5 |

La détection se fait de la même manière que celle décrite dans l'exemple 3 avec le même crayon-diode. Le papier émet une lumière de couleur blanche au point de contact du rayon et du papier et il apparaît un front de couleur bleu avec une traînée rouge dans le sillage du déplacement de ce point lors du balayage avec le crayon-diode. On a donc ici un système de marquage à trois couleurs.

EXEMPLE 7

Cet exemple illustre l'utilisation de deux luminophores selon le mode de réalisation du type de l'exemple 6 et aussi un système de marquage à trois couleurs. On utilise la même formule papier et la même formule de couchage que dans l'exemple 6. On utilise aussi un mélange de luminophores dans une proportion massique de 50/50 avec le luminophore B de l'exemple 6 et un luminophore A' de formule $Ba_{2,7}Eu_{0,3}Mg_{0,9}Mn_{0,1}Si_2O_8$. Ce luminophore A' est obtenu de la même manière que celle décrite dans l'exemple 1, seules changent les proportions stoechiométriques.

La détection se fait de la même manière que celle décrite dans l'exemple 3 avec le même crayon-diode. Le papier émet une lumière de couleur blanche au point de contact du rayon et du papier et il apparaît un front de couleur verte avec une traînée rouge dans le sillage du déplacement de ce point lors du balayage avec le crayon-diode.

**Revendications**

1. Procédé pour l'authentification d'un matériau, **caractérisé en ce qu'**un matériau qui comprend :

    - soit au moins un luminophore apte à produire, après excitation, deux émissions de lumière dont les longueurs d'onde et les temps de déclin de l'émission respectifs sont différents;
    - soit plusieurs luminophores aptes à produire, chacun, après excitation, une émission de lumière dont la longueur d'onde et le temps de déclin de l'émission sont différents de la longueur d'onde et du temps de déclin de l'émission de l'autre ou des autres luminophores;

    est soumis à une excitation et on observe si le matériau produit au moins deux émissions de lumière dont les longueurs d'onde et les temps de déclin de l'émission respectifs sont différents;

    le procédé étant mis en oeuvre soit en appliquant un mouvement relatif entre le matériau et la source d'excitation, soit en soumettant le matériau à l'excitation puis en éteignant la source d'excitation et en observant la production d'un phénomène de rémanence.

2. Procédé selon la revendication 1, **caractérisé en ce que** le matériau comprend un luminophore choisi parmi ceux de formule :

$$Ba_{3(1-x)}Eu_{3x}Mg_{1-y}MnySi_2O_8 \qquad (1\text{-}1)$$

dans laquelle $0 < x \leq 0,3$ et $0 < y \leq 0,3$;

$$BaMg_2Si_2O_7 : Eu, Mn \qquad (1\text{-}2)$$

$$Ba_2MgSi_2O_7: Eu, Mn \qquad (1\text{-}3)$$

dans lesquelles l'europium et le manganèse sont en substitution du baryum et du magnésium et dans les mêmes quantités que celles pour les produits de la formule (1-1).

3. Procédé selon la revendication 2, **caractérisé en ce que** le matériau comprend un luminophore de formule (1-1) précitée dans laquelle au moins un des éléments baryum, magnésium et silicium peut être partiellement substitué, respectivement, par du calcium et/ou du strontium pour le baryum, du zinc pour le magnésium, du germanium, de l'aluminium et/ou du phosphore pour le silicium.

4. Procédé selon la revendication 2 ou 3, **caractérisé en ce que** le matériau comprend un luminophore de formule (1-1) précitée dans laquelle :

0,0001 ≤ x ≤ 0,25 et 0,0001 ≤ y ≤ 0,25.

**5.** Procédé selon la revendication 2 ou 3, **caractérisé en ce que** le matériau comprend un luminophore de formule (1-1) précitée dans laquelle : 0,01 ≤ x ≤ 0,03 et 0,04 ≤ y ≤ 0,06.

**6.** Procédé selon la revendication 1, **caractérisé en ce que** le matériau comprend un luminophore choisi parmi ceux des formules suivantes :

(2-1)  $BaMgAl_{10}O_{17}$

(2-2)  $BaMg_2Al_{16}O_{27}$

(2-3)  $BaMgAl_{14}O_{23}$

dans laquelle le baryum et le magnésium sont substitués en partie par l'europium et le manganèse respectivement.

**7.** Procédé selon la revendication 1, **caractérisé en ce que** le matériau comprend un luminophore choisi parmi ceux de formule :

- (3) $LnPO_4$ dans laquelle Ln désigne un mélange de lanthanides, notamment de formule $(LaCeTb)PO_4$, plus particulièrement un luminophore de formule $La_xCe_yTb_{(1-x-y)}PO_4$ dans laquelle 0,4 ≤ x ≤ 0,6 et x+y > 0,8 ;
- (4) $M_2P_2O_7$: Eu, Mn dans laquelle M désigne au moins un alcalino-terreux ;
- (5) $M_3PO_4$ : Eu, Mn dans laquelle M désigne au moins un alcalino-terreux ;
- (6) $Ca_5(PO_4)_3X$ : Eu, Mn, dans laquelle le calcium peut être éventuellement substitué par au moins un alcalino-terreux et X est un halogène ; ou
- (7) $MGa_2S_4$ : Eu, Mn, dans laquelle M désigne au moins un alcalino-terreux.

**8.** Procédé selon l'une des revendications précédentes, **caractérisé en ce que** le matériau comprend un premier luminophore apte à produire, après excitation, deux émissions de lumière dont les longueurs d'onde et les temps de déclin de l'émission respectifs sont différents et un second luminophore apte à produire, après excitation, une émission de lumière dont la longueur d'onde et le temps de déclin de l'émission sont différents des longueurs d'onde et des temps de déclin des émissions du premier luminophore.

**9.** Procédé selon l'une des revendications précédentes, **caractérisé en ce que** le matériau comprend un ou plusieurs luminophores choisis de telle manière que les différents temps de déclin de l'émission soient dans un rapport d'au plus $10^{-1}$, de préférence d'au plus $10^{-3}$ et encore plus préférentiellement d'au plus $10^{-5}$.

**10.** Procédé selon l'une des revendications précédentes, **caractérisé en ce que** le matériau comprend un ou plusieurs luminophores choisis de telle manière que la différence entre les longueurs d'onde émises est d'au moins 50 nm et plus particulièrement d'au moins 100 nm.

**11.** Procédé selon l'une des revendications précédentes, **caractérisé en ce que** le matériau comprend un ou plusieurs luminophores qui émettent dans le visible.

**12.** Procédé selon l'une des revendications précédentes, **caractérisé en ce que** le matériau est un papier, un carton, une peinture, un textile, une encre, un verre ou un matériau macromoléculaire.

**13.** Procédé selon l'une des revendications précédentes, **caractérisé en ce que** le matériau est un document fiduciaire, plus particulièrement un billet de banque.

**14.** Procédé selon l'une des revendications précédentes, **caractérisé en ce qu'**on utilise un détecteur muni d'une ou de plusieurs sources émettant une ou des radiations vers le matériau et comprenant en outre des moyens de mesure d'un signal d'émission, ces moyens fonctionnant par périodes temporelles pour pouvoir détecter des émissions décalées dans le temps.

**15.** Procédé selon l'une des revendications précédentes, **caractérisé en ce que** l'on utilise comme source d'excitation un crayon-diode avec lequel on balaye le matériau.

**Patentansprüche**

1. Verfahren zur Echtheitsprüfung eines Materials, **dadurch gekennzeichnet, dass** ein Material, das Folgendes umfasst:

   - entweder mindestens einen Luminophor, der geeignet ist, nach Anregung, zwei Lichtemissionen zu erzeugen, deren jeweilige Wellenlängen und Emissionsabklingzeiten verschieden sind;
   - oder mehrere Luminophore, die geeignet sind, nach Anregung, jeweils eine Lichtemission zu erzeugen, deren Wellenlänge und Emissionsabklingzeit von der Wellenlänge und der Emissionsabklingzeit des anderen Luminophors oder der anderen Luminophore verschieden ist;

   einer Anregung ausgesetzt wird und beobachtet wird, ob das Material mindestens zwei Lichtemissionen erzeugt, deren jeweilige Wellenlängen und Emissionsabklingzeiten verschieden sind;
   wobei das Verfahren entweder unter Anwendung einer relativen Bewegung zwischen dem Material und der Anregungsquelle durchgeführt wird, oder indem das Material der Anregung ausgesetzt, dann die Anregungsquelle ausgeschaltet und die Erzeugung eines Remanenzphänomens beobachtet wird.

2. Verfahren nach Anspruch 1, **dadurch gekennzeichnet, dass** das Material einen Luminophor umfasst, der aus jenen mit der Formel:

$$Ba_{3(1-x)}EU_{3x}Mg_{1-y}Mn_ySi_2O_8 \qquad (1\text{-}1)$$

   wobei $0 < x \leq 0{,}3$ und $0 < y \leq 0{,}3$;

$$BaMg_2Si_2O_7: Eu, Mn \qquad (1\text{-}2)$$

$$Ba_2MgSi_2O_7: Eu, Mn \qquad (1\text{-}3)$$

   ausgewählt ist, wobei Europium und Mangan anstelle von Barium und Magnesium und in den gleichen Mengen wie jenen für die Produkte der Formel (1-1) eingesetzt werden.

3. Verfahren nach Anspruch 2, **dadurch gekennzeichnet, dass** das Material einen Luminophor mit der vorgenannten Formel (1-1) umfasst, wobei mindestens eines der Elemente Barium, Magnesium und Silicium teilweise jeweils mit Calcium und/oder Strontium für Barium, Zink für Magnesium, Germanium, Aluminium und/oder Phosphor für Silicium substituiert sein kann.

4. Verfahren nach Anspruch 2 oder 3, **dadurch gekennzeichnet, dass** das Material einen Luminophor mit der vorgenannten Formel (1-1) umfasst, wobei:

   $0{,}0001 \leq x \leq 0{,}25$ und $0{,}0001 \leq y \leq 0{,}25$.

5. Verfahren nach Anspruch 2 oder 3, **dadurch gekennzeichnet, dass** das Material einen Luminophor mit der vorgenannten Formel (1-1) umfasst, wobei: $0{,}01 \leq x \leq 0{,}03$ und $0{,}04 \leq y \leq 0{,}06$.

6. Verfahren nach Anspruch 1, **dadurch gekennzeichnet, dass** das Material einen Luminophor umfasst, der aus jenen mit der Formel:

   $(2\text{-}1) \qquad BaMgAl_{10}O_{17}$

   $(2\text{-}2) \qquad BaMg_2Al_{16}O_{27}$

   $(2\text{-}3) \qquad BaMgAl_{14}O_{23}$

   ausgewählt ist, wobei Barium und Magnesium teilweise durch Europium bzw. Mangan substituiert sind.

**7.** Verfahren nach Anspruch 1, **dadurch gekennzeichnet, dass** das Material einen Luminophor umfasst, der aus jenen mit der Formel:

- (3) $LnPO_4$, wobei Ln ein Lanthanidengemisch, insbesondere mit der Formel $(LaCeTb)PO_4$, insbesondere einen Luminophor mit der Formel $La_xCe_yTb_{(1-x-y)}PO_4$, wobei $0,4 \leq x \leq 0,6$ und $x+y > 0,8$, bezeichnet;
- (4) $M_2P_2O_7$: Eu, Mn, wobei M mindestens ein Erdalkalimetall bezeichnet;
- (5) $M_3PO_4$: Eu, Mn, wobei M mindestens ein Erdalkalimetall bezeichnet;
- (6) $Ca_5(PO_4)_3X$: Eu, Mn, wobei das Calcium gegebenenfalls mit mindestens einem Erdalkalimetall substituiert sein kann und X ein Halogen ist; oder
- (7) $MGa_2S_4$: Eu, Mn, wobei M mindestens ein Erdalkalimetall bezeichnet, ausgewählt ist.

**8.** Verfahren nach einem der vorhergehenden Ansprüche, **dadurch gekennzeichnet, dass** das Material einen ersten Luminophor, der geeignet ist, nach Anregung, zwei Lichtemissionen zu erzeugen, deren jeweilige Wellenlängen und Emissionsabklingzeiten verschieden sind und einen zweiten Luminophor umfasst, der geeignet ist, nach Anregung, eine Lichtemission zu erzeugen, deren Wellenlänge und Emissionsabklingzeit von den Wellenlängen und den Emissionsabklingzeiten des ersten Luminophoren verschieden ist.

**9.** Verfahren nach einem der vorhergehenden Ansprüche, **dadurch gekennzeichnet, dass** das Material einen oder mehrere Luminophore umfasst, die derart ausgewählt sind, dass die verschiedenen Emissionsabklingzeiten in einem Verhältnis von höchstens $10^{-1}$, bevorzugt höchstens $10^{-3}$ und noch stärker bevorzugt höchstens $10^{-5}$ liegen.

**10.** Verfahren nach einem der vorhergehenden Ansprüche, **dadurch gekennzeichnet, dass** das Material einen oder mehrere Luminophore umfasst, die derart ausgewählt sind, dass der Unterschied zwischen den emittierten Wellenlängen mindestens 50 nm und insbesondere mindestens 100 nm beträgt.

**11.** Verfahren nach einem der vorhergehenden Ansprüche, **dadurch gekennzeichnet, dass** das Material einen oder mehrere Luminophore umfasst, die im sichtbaren Bereich emittieren.

**12.** Verfahren nach einem der vorhergehenden Ansprüche, **dadurch gekennzeichnet, dass** das Material ein Papier, ein Karton, ein Bild, ein Gewebe, eine Tinte, ein Glas oder ein makromolekulares Material ist.

**13.** Verfahren nach einem der vorhergehenden Ansprüche, **dadurch gekennzeichnet, dass** das Material ein Wertdokument, insbesondere eine Banknote ist.

**14.** Verfahren nach einem der vorhergehenden Ansprüche, **dadurch gekennzeichnet, dass** ein Detektor verwendet wird, der mit einer oder mehreren Quellen ausgestattet ist, die eine oder mehrere Strahlungen in Richtung des Materials emittieren und ferner Mittel zum Messen eines Emissionssignals umfassen, wobei diese Mittel mit Zeitintervallen arbeiten, um zeitversetzte Emissionen nachweisen zu können.

**15.** Verfahren nach einem der vorhergehenden Ansprüche, **dadurch gekennzeichnet, dass** als Anregungsquelle ein Diodenstift verwendet wird, mit dem das Material abgetastet wird.

**Claims**

**1.** Method for authenticating a material, **characterized in that** a material which comprises:

- either at least one phosphor capable of producing, after excitation, two light emissions, the respective wavelengths and the decay times of the emission being different;
- or several phosphors each capable of producing, after excitation, a light emission, the wavelength and the decay time of the emission being different than the wavelength and the decay time of the emission of the other phosphor(s);

is subjected to an excitation and it is observed if the material produces at least two light emissions, the respective wavelengths and decay times of the emission being different;

the method being implemented either by applying a relative movement between the material and the excitation source, or by subjecting the material to the excitation and then turning the excitation source off and observing the production of a phosphorescence effect.

2. Method according to Claim 1, **characterized in that** the material comprises a phosphor chosen from those of formula:

$$Ba_{3(1-x)}EU_{3x}Mg_{1-y}Mn_ySi_2O_8 \qquad (1-1)$$

in which $0 < x \leq 0.3$ and $0 < y \leq 0.3$;

$$BaMg_2Si_2O_7:Eu,Mn \qquad (1-2)$$

$$Ba_2MgSi_2O_7:Eu,Mn \qquad (1-3)$$

in which the europium and manganese are substituted for the barium and magnesium, and in the same quantities as those in the case of the products of formula (1-1).

3. Method according to Claim 2, **characterized in that** the material comprises a phosphor of the aforementioned formula (1-1) in which at least one of the elements barium, magnesium and silicon may be partly substituted, respectively, with calcium and/or strontium in the case of barium, with zinc in the case of magnesium, germanium or aluminum, and/or with phosphorus in the case of silicon.

4. Method according to Claim 2 or 3, **characterized in that** the material comprises a phosphor of the aforementioned formula (1-1) in which: $0.0001 \leq x \leq 0.25$ and $0.0001 \leq y \leq 0.25$.

5. Method according to Claim 2 or 3, **characterized in that** the material comprises a phosphor of the aforementioned formula (1-1) in which: $0.01 \leq x \leq 0.03$ and $0.04 \leq y \leq 0.06$.

6. Method according to Claim 1, **characterized in that** the material comprises a phosphor chosen from those of the following formulae:

$$BaMgAl_{10}O_{17} \qquad (2-1)$$

$$BaMg_2Al_{16}O_{27} \qquad (2-2)$$

$$BaMgAl_{14}O_{23} \qquad (2-3)$$

in which the barium and the magnesium are partly substituted with europium and manganese respectively.

7. Method according to Claim 1, **characterized in that** the material comprises a phosphor chosen from those of formula:

- (3) $LnPO_4$, in which Ln denotes a mixture of lanthanides, especially of formula $(La,Ce,Tb)PO_4$, more particularly a phosphor of formula $La_xCe_yTb_{(1-X-y)}PO_4$ in which $0.4 \leq x \leq 0.6$ and $x + y > 0.8$;
- (4) $M_2P_2O_7:Eu,Mn$ in which M denotes at least one alkaline-earth metal;
- (5) $M_3PO_4$: Eu, Mn in which M denotes at least one alkaline-earth metal;
- (6) $Ca_5(PO_4)_3X:Eu,Mn$ in which the calcium may optionally be substituted with at least one alkaline-earth metal and X is a halogen; or
- (7) $MGa_2S_4$ : Eu, Mn in which M denotes at least one alkaline-earth metal.

8. Method according to one of the preceding claims, **characterized in that** the material comprises a first phosphor capable of producing, after excitation, two light emissions, the respective emission wavelengths and decay times being different, and a second phosphor capable, after excitation, of emitting light, the wavelength and the decay time of the emission being different than the wavelengths and decay times of the emissions of the first phosphor.

9. Method according to one of the preceding claims, **characterized in that** the material comprises one or more phosphors chosen in such a manner that the various decay times of the emission are in a ratio of at most $10^{-1}$, preferably at most $10^{-3}$ and even more preferably at most $10^{-5}$.

10. Method according to one of the preceding claims, **characterized in that** the material comprises one or more phosphors chosen in such a manner that the difference between the emitted wavelengths is at least 50 nm and more particularly at least 100 nm.

**11.** Method according to one of the preceding claims, **characterized in that** the material comprises one or more phosphors emitting in the visible.

**12.** Method according to one of the preceding claims, **characterized in that** the material is a paper, a board, a paint, a textile, an ink, a glass or a macromolecular material.

**13.** Method according to one of the preceding claims, **characterized in that** the material is a fiduciary document, more particularly a banknote.

**14.** Method according to one of the preceding claims, **characterized in that** it uses a detector provided with one or more sources emitting one or more types of radiation toward the material, and further including means for measuring an emission signal, these means operating over time periods in order to be able to detect emissions delayed over time.

**15.** Method according to one of the preceding claims, **characterized in that** an LED light pen is used as excitation source, the material being scanned with said pen.

## RÉFÉRENCES CITÉES DANS LA DESCRIPTION

**Documents brevets cités dans la description**

- EP 498689 A
- EP 581621 A